# EUROPÄISCHE PATENTANMELDUNG

(11) **EP 1 538 430 A1**
(43) Veröffentlichungstag der Anmeldung: **08.06.2005**
(21) Anmeldenummer: 04090391.6
(22) Anmeldetag: 11.10.2004
(51) Int. Cl.: G01J 3/46, G01J 3/18

(54) **Farbsensor**

(30) Priorität: 02.12.2003 DE 10356729
(71) Anmelder: DLR Deutsches Zentrum für Luft- und Raumfahrt e.V., 53175 Bonn (DE)
(72) Erfinder: Eckardt, Andreas, 12524 Berlin (DE)
(74) Vertreter: Effert, Bressel und Kollegen

(57) **Zusammenfassung**

Die Erfindung betrifft einen Farbsensor zur Erfassung der absoluten Farbe eines Objektes (11), umfassend eine durchstimmbare Lichtquelle, die in einem Wellenlängenbereich von 400 bis 900 nm emittiert, wobei der emittierte Wellenlängenbereich einstellbar ist, einen panchromatischen photoelektrischen Sensor (6) und eine Aufnahmeeinrichtung (10) für ein zu untersuchendes Objekt (11), wobei die durchstimmbare Lichtquelle derart zu dem Objekt (11) angeordnet ist, dass ein zu untersuchender Abschnitt des Objektes (11) bestrahlt wird und der photoelektrische Sensor (6) derart zum Objekt (11) ausgerichtet ist, dass dieser durch die reflektierte Strahlung vom Objekt (11) ausgeleuchtet wird, wobei dem Sensor (6) eine Steuer- und Speichereinheit zugeordnet ist, mittels derer die Wellenlänge der Lichtquelle einstellbar ist, wobei die erfassten Daten des Sensors (6) für jeden Wellenlängenbereich in der Speichereinheit abspeicherbar sind, wobei die Daten des Sensors (6) mindestens mit Kalibrationsdaten der Lichtquelle und des Sensors (6) korrigierbar sind, sowie ein zugehöriges Verfahren.

## Beschreibung

Die Erfindung betrifft einen Farbsensor sowie ein Verfahren zur absoluten Farberkennung.

Die derzeitigen Sensoren, die es auf dem Gebiet der absoluten Farberkennung gibt, basieren meist auf Dosimeteransätze, die zur spektralen Vermessung der Farbintensitäten dienen. Leider beinhalteten diese Ansätze der Vermessung keine systematische Fehlerkorrektur hinsichtlich der Beleuchtung, der Temperatur, des Luftdruckes und des Aufnahmewinkels.

Der Erfindung liegt daher das technische Problem zugrunde, einen Farbsensor zu schaffen, mittels dessen eine systematische Fehlerkorrektur möglich ist, sowie ein zugehöriges Verfahren zur absoluten Farberkennung zur Verfügung zu stellen.

Die Lösung des technischen Problems ergibt sich durch die Gegenstände mit den Merkmalen der Patentansprüche 1 und 12. Weitere vorteilhafte Ausgestaltungen ergeben sich aus den Unteransprüchen.

Hierzu umfasst der Farbsensor zur Erfassung der absoluten Farbe eines Objektes eine durchstimmbare Lichtquelle, die in einem Wellenlängenbereich von 400 - 900 nm emittiert, wobei der emittierte Wellenlängenbereich einstellbar ist, einen panchromatischen photoelektrischen Sensor und eine Aufnahmeeinrichtung für ein zu untersuchendes Objekt, wobei die durchstimmbare Lichtquelle derart zu dem Objekt angeordnet ist, dass ein zu untersuchender Abschnitt des Objektes bestrahlt wird und der photoelektrische Sensor derart zum Objekt ausgerichtet ist, dass dieser durch die reflektierte Strahlung vom Objekt ausgeleuchtet wird, wobei dem Sensor eine Steuer- und Speichereinheit zugeordnet ist, mittels derer die Wellenlänge der Lichtquelle einstellbar ist, wobei die erfassten Daten des Sensors für jeden Wellenlängenbereich in der Speichereinheit abspeicherbar sind, wobei die Daten des Sensors mit Kalibrationsdaten der Lichtquelle und des Sensors korrigierbar sind. Durch die exakte Kalibration des Farbsensors vor dem Messvorgang können alle systematischen Fehlerquellen im Prozess erfasst und in Kalibrationsdateien abgelegt werden. Durch die Kalibrationsdateien können dann aus den Daten des Sensors echte Absolutwerte für die Farbe bestimmt werden, die vergleichbar sind. Beispielsweise kann so die gleichmäßige Qualität einer Lackieranlage überprüft werden. Dabei sei angemerkt, dass die notwendige Breite des Wellenlängenintervalls statt 400 - 900 nm auch kleiner, beispielsweise 400 - 800 nm, sein kann.

In einer bevorzugten Ausführungsform ist die durchstimmbare Lichtquelle als Weißlichtquelle mit nachgeordnetem Monochromator ausgebildet. Hierdurch lässt sich eine Auflösung von ca. 5 nm erreichen. Somit lässt beispielsweise der interessierende Spektralbereich von 400 - 900 nm in 100-Schritten durchfahren.

In einer weiteren bevorzugten Ausführungsform ist vor dem Eingang und dem Ausgang des Monochromators jeweils eine Diffuser-Scheibe angeordnet. Hierdurch wird die Struktur der Weißlichtquelle verschliffen bzw. eine gleichmäßige Abstrahlung am Ausgang des Monochromators erreicht.

In einer weiteren bevorzugten Ausführungsform ist die Aufnahmeeinrichtung als lichtundurchlässiger Ring oder Rahmen ausgebildet. Hierdurch wird verhindert, dass seitlich Streulicht eingekoppelt wird.

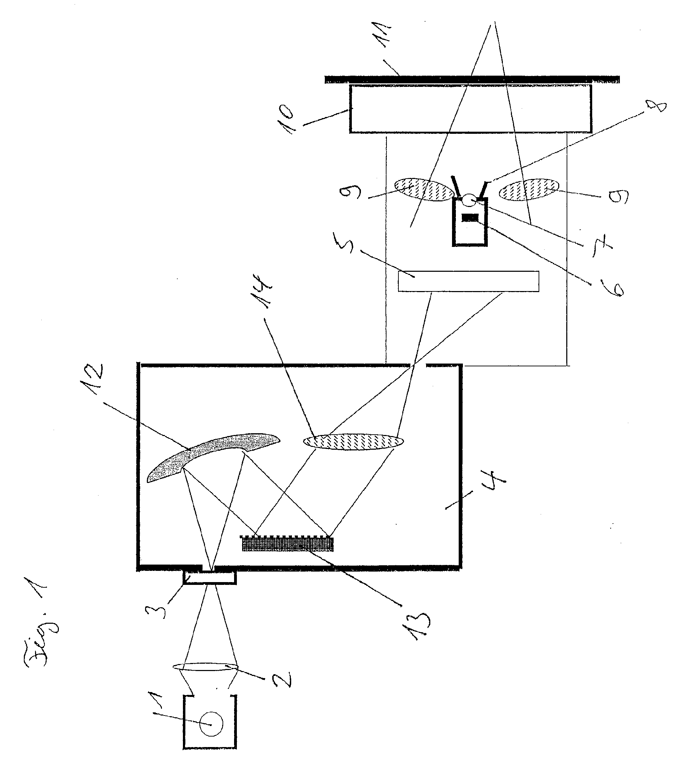

In einer weiteren bevorzugten Ausführungsform ist dem Sensor ein Objektiv zugeordnet, das auf die Oberfläche des Objektes fokussiert ist. Dies ermöglicht die Abbildung des Teils der Oberfläche des Objektes, der untersucht wird.

In einer weiteren bevorzugten Ausführungsform ist dem Sensor selbst ein weiterer Streulichtschutz zugeordnet, um Streulicht von benachbarten Gebieten der zu untersuchenden Fläche zu unterdrücken.

In einer weiteren bevorzugten Ausführungsform sind zwischen der Diffuser-Scheibe und dem Objekt zwei Objektive angeordnet. Die Objektive sind dabei unscharf zur Objektfläche eingestellt, so dass das von der Diffuser-Scheibe kommende Licht unscharf auf die zu untersuchende Objektfläche projiziert wird. Diese gerichtete, unscharfe Abbildung ermöglicht ein Verschleifen der eventuell noch vorhandenen Strukturen in der Ausleuchtung der Objektfläche.

In einer weiteren bevorzugten Ausführungsform ist der Sensor als Pixel-Sensor mit Makropixelbildung ausgebildet. Dabei ist der Sensor vorzugsweise als CCD- oder CMOS-Matrix-Sensor ausgebildet. Aufgrund der geometrischen Auflösung des Sensors kann somit ein Körnungsgrad der spektralen Komponenten über die Fläche emittiert werden. Durch die Makropixelbildung kann dann die räumliche Auflösung eingestellt werden und im Extremfall eine Mittelung über die gesamte zu untersuchende Fläche erfolgen.

In einer weiteren bevorzugten Ausführungsform ist der Sensor temperaturstabilisiert, um die systematischen Fehler aufgrund von Temperaturschwankungen auszuschließen.

In einer weiteren bevorzugten Ausführungsform ist der Abstrahlwinkel der Lichtquelle auf die Objektoberfläche definiert einstellbar und veränderbar. Hierdurch ist es möglich, das vom Einfallswinkel abhängige Reflektionsverhalten der Objektoberfläche zu erfassen, wodurch sich auch der Farbeindruck ändert. Hierzu können beispielsweise verschiedene Optiken konzentrisch um den Sensor herum angeordnet werden, deren Licht jeweils unter einem bestimmten Winkel auf die Oberfläche trifft. Mittels einer synchronisierten, rotierbaren Blende kann dann beispielsweise jeweils eine Optik freigeschaltet werden und die reflektierte Strahlung am Sensor gemessen werden. Insbesondere bei strukturierten Oberflächen kann sich das Reflexionsverhalten stark über dem Einfallswinkel verändern, was so ebenfalls erfassbar ist.

Ebenso wie der Einfallswinkel des einfallenden Lichtes veränderbar ist, kann in einer weiteren bevorzugten Ausführungsform vorgesehen sein, dass der Beobachtungswinkel des Sensors veränderbar ist.

Die nach der Überarbeitung durch die Kalibrationsdaten vorliegenden Werte sind absolute Farbwerte und für Vergleiche bereits voll verwendbar. Des Weiteren ist es möglich, diese Werte mittels einer Transformation in Echtfarben zu transformieren, indem die Daten mit einer spektralen Verteilungsfunktion des menschlichen Auges gewichtet werden. Derartige Echtfarbinformationen haben in vielen Anwendungsfällen mehr Aussagekraft, da es insbesondere in der Qualitätskontrolle darauf ankommt, ob für den menschlichen Betrachter Unterschiede wahrnehmbar sind.

Die Erfindung wird nachfolgend anhand eines bevorzugten Ausführungsbeispieles näher erläutert. Die einzige Figur zeigt ein schematisches Blockschaltbild eines Farbsensors.

Der Farbsensor besteht aus einer Weißlichtquelle 1, einer Abbildungsoptik 2, einer ersten Diffuser-Scheibe 3, einem Monochromator 4, einer weiteren Diffuser-Scheibe 5, einem Sensor 6 mit Objektiv 7 und Streulichtschutz 8, zwei Optiken 9 und einer Aufnahmeeinrichtung 10. Mittels der Aufnahmeeinrichtung 10 wird das zu untersuchende Objekt 11 mechanisch reproduzierbar und lichtdicht befestigt. Lichtdicht bedeutet dabei, dass an den Befestigungsstellen bzw. Auflagepunkten kein Licht von außen in die Vorrichtung eindringen kann. Da auch durch das Objekt selbst kein Licht eindringen kann, stammt sämtlich von Sensor 6 erfasstes Licht vom Objekt 11 aufgrund der Reflexion der Strahlung des Monochromators 4.

Zunächst soll kurz der prinzipielle Aufbau beschrieben werden. Die Weißlichtquelle 1 strahlt breitbandig über das gesamte Spektrum ab, wobei das Licht über die Abbildungsoptik 2 auf einen Eingangsspalt des Monochromators 4 fokussiert wird. Durch die Diffuser-Scheibe 3 werden dabei Abbildungseigenschaften der Weißlichtquelle 1 verschleift und der Spalt gleichmäßig ausgeleuchtet. Im Monochromator 4 wird das Weißlicht spektral zerlegt, so dass am Ausgang eine durchstimmbare, sehr schmalbandige Strahlung zur Verfügung steht. Die Halbwertsbreite beträgt beispielsweise 5 nm. Ein möglicher Aufbau des Monochromators 4 ist, dass das Weißlicht zunächst auf einen Parabolspiegel 12 fällt und von diesem parallelisiert auf ein Gitter 13 abgebildet wird. Am Gitter 13 wird das Weißlicht spektral zerlegt und über eine Abbildungsoptik 14 auf den Ausgangsspalt abgebildet. Durch eine sehr genaue Verschiebung des Gitters 13 und/oder des Ausgangsspaltes kann dann ein gewünschtes Wellenlängenintervall als Ausgangsstrahlung eingestellt werden. Mittels der Diffuser-Scheibe 5 wird die Ausgangsstrahlung des Monochromators 4 gleichmäßig verschleift und über die beiden Optiken 9 unscharf auf die Oberfläche des Objektes 11 abgebildet. Die von dort reflektierte Strahlung gelangt dann zum Sensor 6 und kann dort gemessen werden. Dabei wird durch den Streulichtschutz 8 verhindert, dass von seitlichen Bereichen des Objektes 11 reflektierte Strahlung bzw. Strahlung aufgrund von Mehrfach-Reflexionen erfasst wird, die die Messung verfälschen würden.

Zur Bestimmung der absoluten Farbe wird die Vorrichtung zunächst kalibriert. Dabei wird insbesondere die spektrale Verteilung der Weißlichtquelle 1 als auch des Sensors 6 berücksichtigt. Anschließend wird jeweils schrittweise ein bestimmtes Längenwellenintervall am Ausgang des Monochromators 4 eingestellt und am Sensor 6 synchronisiert zur Einstellung gemessen. Diese Messdaten werden mittels der Kalibrationsdaten korrigiert und stellen die absoluten Farbwerte des Objektes dar. Die synchrone Einstellung der Strahlung am Monochromator 4 und Messung am Sensor 6 erfolgt über eine nicht dargestellte Steuereinheit, die vorzugsweise dem Sensor 6 zugeordnet ist.

Der Sensor 6 ist vorzugsweise als Pixel-Sensor, beispielsweise als CMOS-Matrix-Sensor, ausgebildet, wodurch eine spektrale Körnung der Oberfläche des Objektes erfassbar ist. Durch eine Makropixelbildung lässt sich dann ein geometrisch gemittelter Spektralwert ermitteln. Dies ermöglicht eine mikroskopische als auch makroskopische definierte eindeutige und jederzeit reproduzierbare lokale Farbanalyse.

## Patentansprüche

1. Farbsensor zur Erfassung der absoluten Farbe eines Objektes (11), umfassend eine durchstimmbare Lichtquelle, die in einem Wellenlängenbereich von 400 bis 900 nm emittiert, wobei der emittierte Wellenlängenbereich einstellbar ist, einen panchromatischen photoelektrischen Sensor (6) und eine Aufnahmeeinrichtung (10) für ein zu untersuchendes Objekt (11), wobei die durchstimmbare Lichtquelle derart zu dem Objekt (11) angeordnet ist, dass ein zu untersuchender Abschnitt des Objektes (11) bestrahlt wird und der photoelektrische Sensor (6) derart zum Objekt (11) ausgerichtet ist, dass dieser durch die reflektierte Strahlung vom Objekt (11) ausgeleuchtet wird, wobei dem Sensor (6) eine Steuer- und Speichereinheit zugeordnet ist, mittels derer die Wellenlänge der Lichtquelle einstellbar ist, wobei die erfassten Daten des Sensors (6) für jeden Wellenlängenbereich in der Speichereinheit abspeicherbar sind, wobei die Daten des Sensors (6) mindestens mit Kalibrationsdaten der Lichtquelle und des Sensors (6) korrigierbar sind.

2. Farbsensor nach Anspruch 1, **dadurch gekennzeichnet, dass** die durchstimmbare Lichtquelle als Weißlichtquelle (1) mit nachgeordnetem Monochromator (4) ausgebildet ist.

3. Farbsensor nach Anspruch 2, **dadurch gekennzeichnet, dass** vor dem Eingang und dem Ausgang des Monochromators (4) jeweils eine Diffuser-Scheibe (3, 5) angeordnet ist.

4. Farbsensor nach einem der vorangegangenen Ansprüche, **dadurch gekennzeichnet, dass** die Aufnahmeeinrichtung (10) als lichtundurchlässiger Ring oder Rahmen ausgebildet ist.

5. Farbsensor nach einem der vorangegangenen Ansprüche, **dadurch gekennzeichnet, dass** dem Sensor (6) ein Objektiv (7) zugeordnet ist, dass auf die Oberfläche des Objektes (11) fokussiert ist.

6. Farbsensor nach einem der vorangegangenen Ansprüche, **dadurch gekennzeichnet, dass** dem Sensor (6) ein Streulichtschutz (8) zugeordnet ist.

7. Farbsensor nach einem der Ansprüche 3 bis 6, **dadurch gekennzeichnet, dass** zwischen der Diffuser-Scheibe (5) und dem Objekt (11) zwei Objektive (9) angeordnet sind.

8. Farbsensor nach einem der vorangegangenen Ansprüche, **dadurch gekennzeichnet, dass** der Sensor (6) als Pixel-Sensor mit Makropixelbildung ausgebildet ist.

9. Farbsensor nach einem der vorangegangenen Ansprüche, **dadurch gekennzeichnet, dass** der Sensor (6) temperaturstabilisiert ist.

10. Farbsensor nach einem der vorangegangenen Ansprüche, **dadurch gekennzeichnet, dass** der Abstrahlwinkel der Lichtquelle auf die Objektoberfläche definiert einstellbar und veränderbar ist.

11. Farbsensor nach einem der vorangegangenen Ansprüche, **dadurch gekennzeichnet, dass** der Blickwinkel des Sensors (6) gegenüber der Objektoberfläche veränderbar ist.

12. Verfahren zur absoluten Farberkennung eines Objektes (11) mittels eines Farbsensors nach Anspruch 1, umfassend folgende Verfahrensschritte:
a) Synchrones Einstellen eines Wellenlängenintervalls an der durchstimmbaren Lichtquelle und Aufnahme durch den Sensor (6), wobei dieser Vorgang solange wiederholt wird, bis das gesamte interessierende Farbspektrum durchlaufen ist,
b) Korrigieren der aufgenommenen Sensordaten mit vorab aufgenommenen Kalibrationsdaten.

13. Verfahren nach Anspruch 12, **dadurch gekennzeichnet, dass** die aufgenommenen Daten einer Makropixelbildung unterzogen werden.

14. Verfahren nach Anspruch 12 oder 13, **dadurch gekennzeichnet, dass** die Daten einer der spektralen Funktion des Auges nachgebildeten Transformationsfunktionen unterworfen werden.
